(19) Europäisches Patentamt
European Patent Office
Office européen des brevets

(11) EP 0 666 688 B1

(12) **EUROPEAN PATENT SPECIFICATION**

(45) Date of publication and mention
of the grant of the patent:
**18.03.1998 Bulletin 1998/12**

(51) Int Cl.[6]: **H04N 5/21**

(21) Application number: **95101009.9**

(22) Date of filing: **26.01.1995**

(54) **Circuit arrangement to accentuate the sharpness and attenuate the noise of a television image**

Schaltung zum Hervorheben der Bildschärfe und zur Dämpfung des Rauschens eines Fernsehbildes

Circuit pour l'accentuation de la netteté et l'atténuation du bruit d'une image vidéo

(84) Designated Contracting States:
**DE FR GB**

(30) Priority: **04.02.1994 FI 940532**

(43) Date of publication of application:
**09.08.1995 Bulletin 1995/32**

(73) Proprietor: **NOKIA TECHNOLOGY GmbH**
**75175 Pforzheim (DE)**

(72) Inventors:
• **Vehviläinen, Markku**
**SF-33720 Tampere (FI)**
• **Yrjänäinen, Jukka**
**SF-33500 Tampere (FI)**

(56) References cited:
**EP-A- 0 550 166**        **US-A- 5 047 856**

• **PATENT ABSTRACTS OF JAPAN vol. 17 no. 437 (E-1413) ,12 August 1993 & JP-A-05 091367 (HITACHI LTD) 9 August 1993,**

## Description

This invention relates to a circuit arrangement to accentuate the sharpness and attenuate the noise of a television image by processing an interlaced luminance signal coming in sample queue form to an output signal of sample queue form first in the noise attenuation circuit and thereafter in the sharpness accentuation circuit.

The television image of the conventional PAL and Secam systems can be improved without interfering in the transmitting standard by measures taken purely in the receiver utilizing different signal processing methods. The receiver can hereby be called an IDTV receiver (Improved Definition Television) or an IQTV receiver (Improved Quality Television). In the receiver the image can be changed by IQTV methods from an interlaced image to a non-interlaced one, the field frequency can be raised, etc. If the resolution is enhanced by increasing the number of pixels both in vertical and in horizontal direction IDTV methods are concerned. IQTV measures, in particular, reduce both the flicker of the white field of large image areas and the line flicker.

In IQTV receivers various kinds of noise reduction algorithms can be used to diminish the noise contained in the signal, by which unnecessary accentuation of the noise is prevented. The amplitude of channel noise is low compared with the image information and so the noise can be simply restricted, for example, with a stop circuit the output signal of which is zero, if the amplitude of the input signal is smaller than the limiting value, the signals below said value being supposed to be noise. The limiting value can be fixed or it may be set adaptively so that the signal to noise ratio is calculated continuously and the limiting value is altered accordingly.

A human eye creates a sharpness impression, when looking at a television image, mainly on the basis of luminance information. From this follows that by sharpening the edges of luminance information a sharper image is attained, in the viewers opinion, and the impression is created that the resolution of the image grows. Sharpening of the edges means that in edge points of the image where the luminance alters a lot, the alteration is sharpened still more. This kind of points are, for example, the contours of an object when the object and the background have different luminance, the margins of texts, etc. The English term "peaking" is commonly used to mean this kind of accentuation of the luminance differences of edges, which term is also used hereafter in this disclosure. Peaking accentuates the middle frequency components of the image, whereby the image seems to be sharper due to the accentuated edges. The accentuation of the middle frequency components is the most efficient way to sharpen the image, because a major portion of the energy of the edges in the frequency level is centralized on the middle frequency components.

In practice, peaking can be carried out with a unidimensional filter as a horizontal peaking or as a vertical peaking, as as a combination thereof or with a two-dimensional filter.

In the horizontal peaking a FIR filter can be used. The inputs are a group of subsequent samples of the same line which are obtained simply by leading a video signal to subsequent pixel delays $pd_1$, $pd_2$, etc. In the accentuation means each input sample is weighted by the desired coefficient $k_1$, $k_2$, etc. and the weighted samples $k_1{*}pd_1$, $k_2{*}pd_2$, etc. are added together in a summer, from the output of which the output signal of the filter is obtained. The pixel delays thus form a filter window comprising subsequent luminance samples of the same line. The series of numbers formed by the accentuation coefficients are called the filter coefficients. By altering the coefficients, the properties of the filter can be changed.

A vertical peaking is analogous with the horizontal peaking with the difference that the delays of one pixel have been replaced with the delays of one line, whereby the window gets vertical dimension. The width of the window of a unidimensional filter is, one sample and the height, for example, three samples. By altering the coefficients of the FIR filter, the properties of the filter can be changed. In a two-dimensional filter the width of the window is bigger than in the unidimensional being, the window being, for example, a 3*3 window.

In most cases the peaking is carried out in the horizontal direction, because a horizontal band-pass filtering does not cause line flicker and neither does it require any line memory. The strength of the peaking can always be adjusted by the television viewer with a remote controller.

The signals coming to the television receiver are affected by many electromagnetic interferences which are shown as noise in the image. For the attenuation of the noise several different methods to be used in the receiver have been presented. The most common of these is the calculation of a temporarily recursive weighted average, in which the value of the pixel is counted as a weighted average of the present value and the pixel value of the preceding field. The pixel value of the preceding field is thus also a recursive weighted average. The operation of this algorithm is based on the presumption that the noise is un-correlated between the subsequent images, whereas the actual image information itself is strongly correlated. Thus a weighted averaging of respective pixels in subsequent fields decreases efficiently the noise. Noise reduction can be made user adjustable in the same way as the peaking.

A simultaneous use of noise reduction and peaking in a receiver brings with it certain drawbacks. The noise reduction and the sharpening of the image are in a way measures contradictory to each other because the noise reduction typically softens the image since it softens the edges and the details in the image, whereas the sharpening of the image increases the noise. Usually the noise reduction is carried out as the first measure for a received signal in the signal processing chain and the sharpening is carried out as the last measure. Hereby, it is very difficult to take their joint effect into consideration in an optimal manner because between the noise reduction and the sharpening many other image processing operations are carried out for the signal. The basic problem is thus the control of several parameters to achieve an optimal sharpening and noise reduction. The peaking cannot be carried out before the noise reduction because it changes the noise distribution and accentuates the noise too much. The effect of the noise reduction decreases and the noise reduction softens the image that had just been sharpened. It is not reasonable to place the peaking after the noise reduction either because then two parallel peaking blocks are needed: one for the output of the noise reduction and the other to the output of the delayed field memory. If an IPC algorithm (Interlaced to Progressive Conversion), from interlaced to non-interlaced image is carried out), the peaking could be placed to be carried out after this algorithm. This is uneconomical, however, because placing the band-pass filter carrying out the peaking after the IPC algorithm would require four line memories to prevent the vertical peaking from causing line flicker in an non-interlaced image.

Another problem is that if these are user-adjustable things it cannot be thought that the user understands the effect of the regulation of different parameters in the adaption of the sharpening and the noise reduction. In a noiseful image the noise reduction must be increased and the edge accentuation respectively strengthened to maintain the details of the image and reduce the noise to level required. Moreover, the resolution of the image material to be transmitted affects the length of the edge accentuation filter and the general luminance degree the limiting values of the edge accentuation. These matters cannot easily be controlled by the user and, besides, they are contradictory with the fact that the amount of the keys of a remote controller should be as small as possible to make the use simple enough.

The problems mentioned can be eliminated according to the invention which is defined in the appended claims, by combining the peaking and the noise reduction by placing the peaking inside the noise reduction. A combined peaking and noise reduction block produces processed samples, which are carried to the field memory. The processed samples are read from the field memory to one of the inputs of the means carrying out the noise reduction algorithm. The processed samples as well as the processed samples of the preceding field received from the field memory are directly suitable as the inputs of the block carrying out the IPC conversion. The peaking is thus carried out inside the feedback loop.

The parameters of the peaking and the noise reduction filters can be fixed or automatically regulated. According to a preferred embodiment suitable value groups are stored as macros in the memory, whereby the user can choose with a remote controller a macro suitable for each television program. For example, if the program to be seen is an old movie having a low resolution and granular source image noise, strong noise reduction and edge accentuation are suitable, whereas, for example, in winter sport images, which usually have high resolution and little noise, the limiting values of the edge accentuation can be set to a low noise level and the peaking can be diminished.

The invention is described more closely by the aid of the enclosed schematic figures, in which

fig. 1        shows the principle of the invention,
fig. 2        illustrates one alternative for calculating the recursive weighted average,
fig. 3        shows another alternative for calculating the recursive weighted average, and
fig. 4        shows one way of peaking as a diagram.

The luminance signal being in sample queue form, which in this example is according to the PAL system having 625 lines format, interlaced scanning and 50 Hz field frequency, is applied to the input of the block A according to the invention. The block contains the peaking and the noise reduction so that the peaking is placed "inside" the noise reduction as appears from the following. The luminance signal is first applied to the noise reduction circuit, which, in this case, is a circuit calculating the recursive weighted average. The samples used in the calculation of the recursive weighted average, which are used in addition to the momentary sample/samples, can appropriately be chosen from the block 5, which can contain one field memory or two field memories, whereby in the latter case the whole image has been stored. The samples received from the noise reduction circuit are carried to the input a of the peaking circuit 4 directly, to the input b delayed with one line memory 2 and to the input c delayed with two line memories, memories 2 and 3. In this way the desired sample window can be formed, in this case 1*3 window.

The peaking can be carried out by any known method and it can be assisted by edge recognition, in which it is examined whether the sample window has an edge or not. In this example, when a 1*3 window is concerned, the presence of a horizontal edge is investigated, but if the window is a bigger n*m window the presence of an optional edge also in other directions can be investigated and carry out the peaking according to the edge information. The samples received from the peaking block, for which a noise reduction and a sharpening have been carried out, are applied to an optional post-processing. This kind of a processing can be either a conversion of a video signal from an interlaced one to an non-interlaced one i.e. an IPC modification which is carried out in block 6, from the output of which an non-interlaced videosignal is thus received.

The samples received from the peaking block 6 are, moreover, carried to block 5 containing at least one field memory, from which they can be further carried to block 1 calculating the recursive weighted average, as has been described above.

As two subsequent fields are needed each time in an IPC conversion the video signal delayed in the field memory 5 is carried to the input of block 6 carrying out the IPC conversion.

The peaking block 4 is located, as can be noted, inside the feedback loop comprising the field memory 5 of the block 1 calculating the recursive weighted average. This is very favourable because the peaking does not, in this case, affect deteriously the form of the noise distribution which means that the noise distribution maintains the form of the normal distribution. As the feedback field in block 5 also has become peaked, it can be used directly as the input of the IPC conversion block without a separate peaking. According to the prior art the peaking is located after the averaging, whereby, because of an optional IPC conversion, the peaking should be carried out separately also for a feedback field. By placing the peaking inside the noise reduction the edge softening effect caused by the noise reduction algorithm decreases.

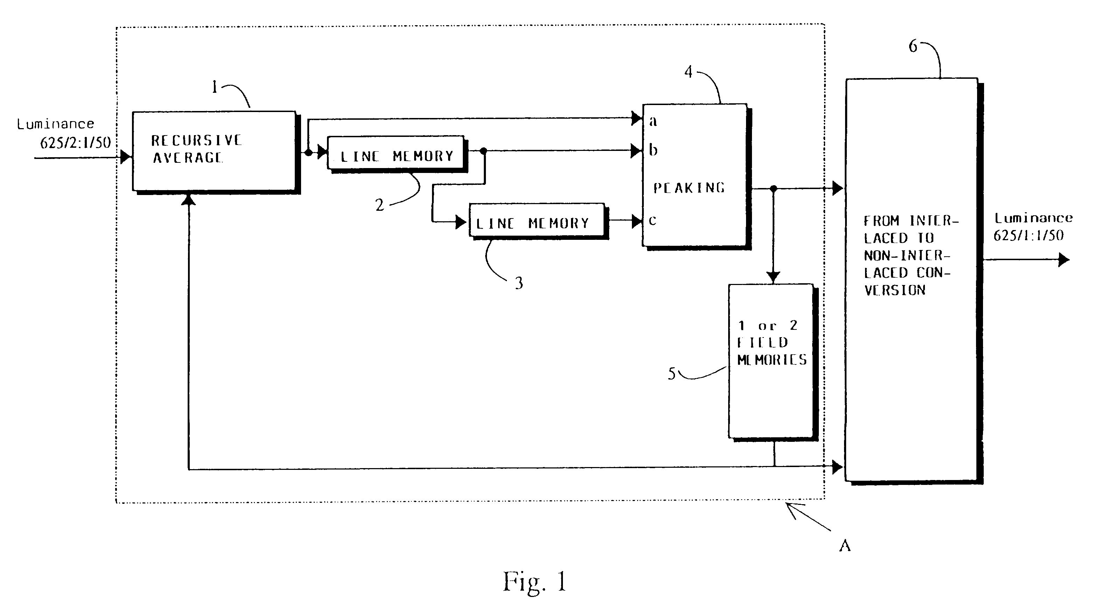

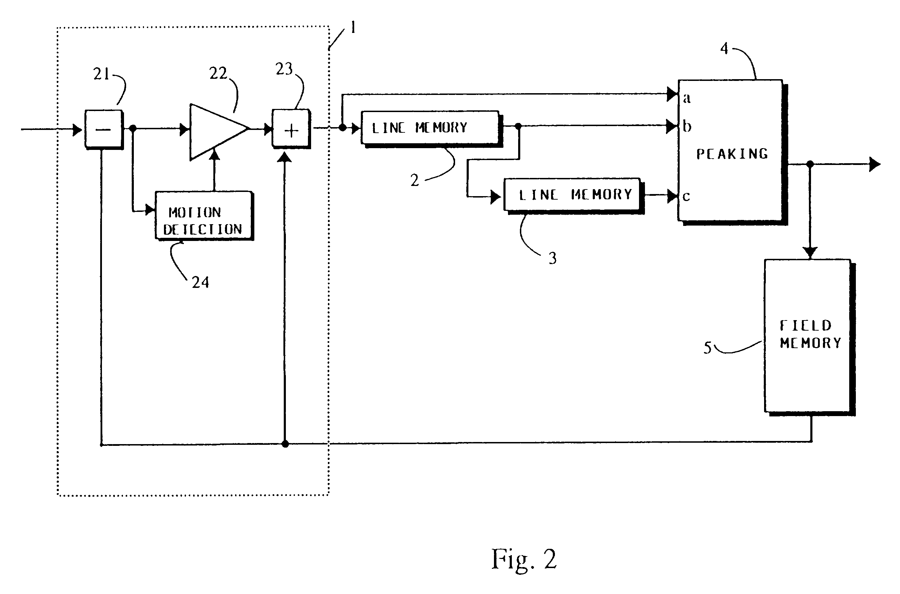

In figure 2 one embodiment for the calculation of the recursive weighted average has been presented. The figure corresponds otherwise to figure 1 except that the block carrying out the calculation of the weighted average is more detailed. Block 1 comprises means 21 forming the remainder, a summer 23, weighting means 22 weighting the input value by coefficient k and the motion detection circuit 24 controlling the weighting member. Sample P of the input field t is marked by P(t) and the corresponding sample of the preceding field obtained from the field memory, to which a noise reduction and peaking has been carried out, by the marking P(t-1). Hereby, the output $P(t)_{recur}$ of the block calculating the weighted average is:

$$P(t)_{recur}=[P(t)-P(t-1)]*k+P(t-1)$$

The motion detection circuit 22 uses some known simple motion detection, the information given by which can be solely "sample belongs to a moving image area" and "the sample belongs to a stationary image area". If the sample represents motion k=1 is given as the value of k, whereby the output of the block is the same as the input. If the sample has been interpreted as stationary, k=½ is given as the value of k, whereby the value of the output will be the recursive weighted average $P(t)_{recur}=½[P(t)-P(t-1)]$ . If the motion detection means can give an indication about the size of the motion, the value of k can be slided in accordance with the motion.

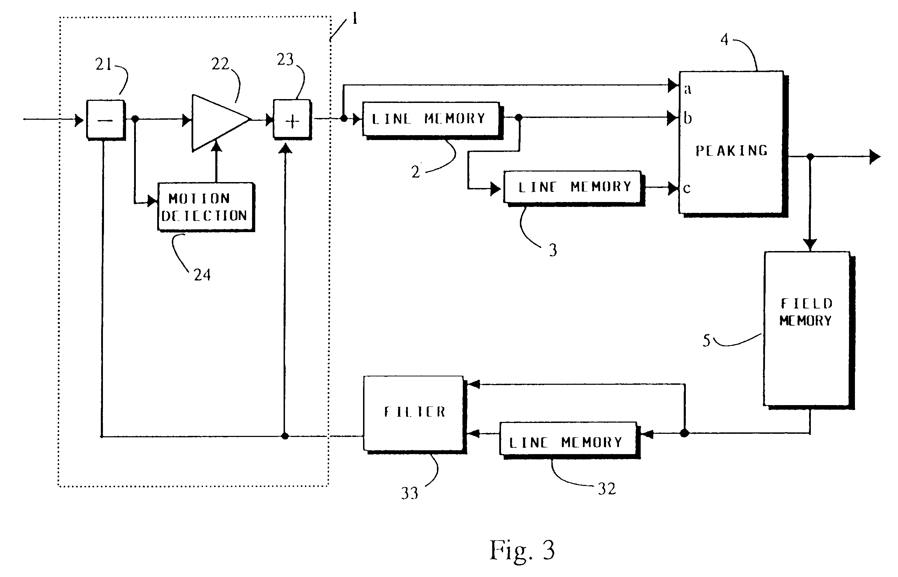

In the calculation of the recursive weighted average of figure 2 one sample of the preceding field is used. In figure 3 there is an embodiment in which, in the calculation of the recursive weighted average the already peaked sample obtained from the feedback branch is processed before the calculation. The reference numbers are, as far as applicable, the same as in figures 1 and 2. The processing means comprise a line delay 32 and a filter 33. By means of the delay samples are obtained from two subsequent lines y, y-1 to the filter. The operation of the filter can be chosen freely and it can be either a linear or a non-linear operation. The output can be, for example, the weighted average of two overlapping pixels ½P(x, y-1)+P(x,y)], in which x is the horizontal position index of the pixel. Also the median of three neighbour points MED[P(x,y-1), P(x-1,y),P(x+1,y)] gives a good result. Also other filtering operations can be used without any restrictions by the invention.

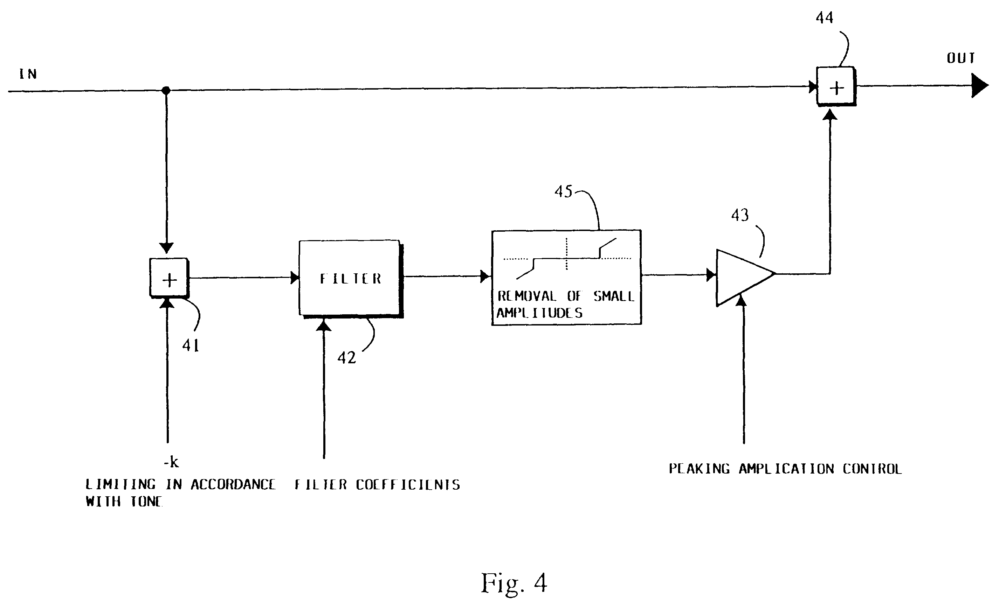

The signal obtained from the output of the recursive filter is peaked in the peaking block 4. The principle of the peaking is shown in figure 4. There the high-frequency component is separated from the output signal by a band-pass type filter 42, from which high-frequency component the small amplitudes can, when desired, be removed in the restriction circuit 45. This attenuates the visibility of the noise in the image. After this the sample obtained is suitably amplified in the amplifier 43, after which it is summerized in the summer 44 back to the original signal. Before filtering the signal can, when desired, be limited in accordance with the tone value by reducing from it the restriction value k in accordance with the tone. The coefficients of the filter can also be set from external control.

The filter 42 used in the peaking can be linear or, for example, an non-linear filter of Volterra type, which filters the edge information to be accentuated from the image. The line delays in front of the peaking circuit (figures 1-3) make the formation of the desired filter mask possible. The coefficients of the linear filter can in a unidimensional case be -1 2 -1, whereby the sample of the input b of the block 4 (figure 1) is weighted by the coefficient 2 and the samples of the inputs a and c by the coefficient -1. If a horizontal peaking is used, whereby the samples come from the same line, the filter coefficients -1 0 2 0 -1 can be used which means that before the summerizing the sample under investigation is weighted by the value 2, its immediate neighbour pixels are not taken along (weight 0) and their neighbours are weighted by the value -1.

In a two-dimensional case a 3∗3 window can be used, the weighting coefficients of whose samples can be, for example:

| -1 | -1 | -1 |
|----|----|----|
| -1 | 8  | -1 |
| -1 | -1 | -1 |

Above the invention has been elucidated by describing more closely some possible solutions realizing the recursive weighted average and peaking possibilities. It must, however, be noted that the claims do not set any limits to the realization of the calculation of the recursive weighted average, nor the realization of the peaking circuit. Essential is only that the peaking is carried out before the feedback of the samples i.e. before the recursion branch. In the block calculating the weighted average the motion detection 24 has been used. This is by no means necessary, but the whole circuit arrangement of the block 1 can be replaced with an FIR filter, the inputs of which include one or more samples obtained from field memory located after the peaking circuit. The filter coefficients can hereby be chosen by external control and they are suited for the macro based regulation presented in another embodiment of the invention.

According to one embodiment of the invention the control of the noise reduction and edge accentuation of the luminance image is made to work on macro basis. You cannot suppose that the user can control the effect of various parameter controls affecting the noise reduction and the edge accentuation and thus reach an optimal result in fitting together the noise reduction and the edge accentuation. In a noiseful image the noise reduction must be increased and, correspondingly, the edge accentuation strengthened so as to maintain the details of the image and the noise would be attenuated to the desired level. Moreover, the resolution of the image material affects both the length and the average frequency of the edge accentuation and the general noise level affects the restriction values of the edge accentuation. According to this embodiment several macros have been made for the control of the noise reduction and the edge accentuation.

Each macro is a group of parameters saved in the memory, which set default values to all noise reduction and edge accentuation algorithms. These default values can be set, for example, from the user's menu with a remote controller, whereby optimal parameters corresponding to several transmission materials of various kinds are pre-set. In addition, the user can on the basis of these default parameters adjust a few parameters, such as the strength of the edge accentuation and the noise reduction. To the menu of the remote controller or the instructions menu shown in the TV-picture easily understandable characteristic names corresponding to the received picture material, such as "old film", "sport", etc., can be chosen, whereby it is chosen by the noiseful/ noiseless button at the characteristic name whether noise reduction is used or not. This is expedient because old films usually have a low resolution and granular source picture noise, whereby a suitable macro produces a strong noise reduction and edge accentuation. The length of the peaking filter is hereby suitable for a low-resolution picture. Respectively, winter sport pictures have high resolution and due to the snow light tone, whereby the corresponding macro adjusts the average frequencies of the edge accentuation filters to a higher level and the peaking does not produce any strong edge accentuation.

The applying of macros in the case of the figures 3 and 4 means that the recursion coefficient K of the member 22 producing the recursion coefficient is one of the parameters of the macro. If FIR filters of varying length are used the coefficients at the outer edge can be set to zero and the other coefficients changed appropriately. In the peaking block the restriction value -k according to the tone and the parameters of the filter are other macros. A sufficient amount of macros have been stored from which the viewer chooses the desired one after which the noise reduction and the peaking are settled in accordance with them.

If the user does not choose any macro the choice of parameters can be attended to automatically. Hereby, a test line can be investigated, if the TV transmission system has got one, or partial picture observed. The noise variety, which sets the strength of the noise reduction and the edge accentuation depending on it, can be monitored from the test line. On the other hand, the general luminance level, on the basis of which the restriction levels of the edge accentuation can be automatically adjusted as optimal, can be decreased on the basis of a histogram in a certain partial area of the picture.

The solution according to the invention for the combination of the noise reduction and the sharpening of the image is very advantageous, as the measures complement each other by correcting errors caused by the other and by this combination the algorithms can be made to operate in the best possible way. Another advantage is that when the post-processing is an IPC conversion the vertical sharpening can be carried out with less line memories compared with the case where the sharpening would be done after the raising of the field frequency. In the peaking taking place after the raising of the field frequency the filter in the vertical direction must be lengthened to have a band-pass response and to prevent the line flicker from becoming amplified. The band-pass filter requires four line memories after the raising of the field frequency, whereas, by using the invention, one can manage with two line memories.

## Claims

1. A circuit arrangement to accentuate the sharpness and attenuate the noise of a television image by processing an interlaced luminance signal coming in sample queue form to an output signal of sample queue form first in a noise attenuation circuit and thereafter in a sharpness accentuation circuit, **characterised** in that

   the noise reduction circuit (1) is recursive and gives a noise reduced sample as a response to at least one luminance signal of an input signal and to at least one sample of a previous image, as a response to a noise reduced sample a sharpness accentuation circuit (4) gives an output signal of the circuit arrangement, which is noise reduced and accentuated as to its sharpness, and
the said output signal is, moreover, led to a memory, wherefrom the samples are led in feedback as a sample of a previous image to an input of the noise reduction circuit (1), whereby the sharpness accentuation circuit (4) is inside the feedback loop of the noise reduction circuit.

2. A circuit arrangement according to claim 1, **characterized** in that the noise reduction (1) circuit is a circuit calculating the recursive weighted average and that the feedback sample is a sample of a preceding field received from an image memory (5).

3. A circuit arrangement according to claim 1 or 2, **characterized** in that the feedback sample is a sample received from the image memory (5) and obtained by filtering from the samples of two preceding fields.

4. A circuit arrangement according to claim 3, **characterized** in that the filtering is a median filtering.

5. A circuit arrangement according to claim 2, **characterized** in that the feedback sample is a weighted average of two samples of the preceding field, the samples being adjacent in the vertical direction.

6. A circuit arrangement according to claim 1, **characterized** in that the noise reduction circuit (1) and the sharpness accentuation circuit (4) are adjustable circuits, the control parameter groups of which are stored in the memory of a receiver as macros, from which the user can choose the desired macro.

**Patentansprüche**

1. Schaltungsanordnung zum Hervorheben der Schärfe und zum Dämpfen des Rauschens eines Fernsehbildes durch Umwandeln eines in Probenschlangenform eingehenden Zwischenzeilen-Luminanzsignals in ein Ausgangssignal in Probenschlangenform zunächst in einer Rauschdämpfungsschaltung und danach in einer Schärfe-Hervorhebungsschaltung, dadurch gekennzeichnet, daß die Rauschunterdrückungsschaltung (1) rekursiv ist und eine rauschunterdrückte Probe in Reaktion auf wenigstens ein Luminanzsignal eines Eingangssignals und auf wenigstens eine Probe eines vorherigen Bildes gibt,

in Reaktion auf eine rauschunterdrückte Probe eine Schärfe-Hervorhebungsschaltung (4) ein Ausgangssignal der Schaltungsanordnung gibt, das rauschunterdrückt und in bezug auf seine Schärfe hervorgehoben ist, und
das genannte Ausgangssignal ferner zu einem Speicher übertragen wird, von wo die Proben als eine Probe eines vorherigen Bildes zu einem Eingang der Rauschunterdrückungsschaltung (1) zurückgeführt werden, so daß sich die Schärfe-Hervorhebungsschaltung (4) innerhalb der Rückführungsschleife der Rauschunterdrückungsschaltung befindet.

2. Schaltungsanordnung nach Anspruch 1, dadurch gekennzeichnet, daß die Rauschunterdrückungsschaltung (1) eine Schaltung ist, die den rekursiv gewichteten Durchschnittswert berechnet, und daß die Rückführungsprobe eine Probe eines vorhergehenden Feldes ist, das von einem Bildspeicher (5) empfangen wurde.

3. Schaltungsanordnung nach Anspruch 1 oder 2, dadurch gekennzeichnet, daß die Rückführungsprobe eine Probe ist, die vom Bildspeicher (5) empfangen und durch Filterung aus den Proben zweier vorhergehender Felder erhalten wurde.

4. Schaltungsanordnung nach Anspruch 3, dadurch gekennzeichnet, daß die Filterung eine Medianfilterung ist.

5. Schaltungsanordnung nach Anspruch 2, dadurch gekennzeichnet, daß die Rückführungsprobe ein gewichteter Durchschnittswert zweier Proben des vorhergehenden Feldes ist, wobei die Proben in senkrechter Richtung benachbart sind.

6. Schaltungsanordnung nach Anspruch 1, dadurch gekennzeichnet, daß die Rauschunterdrückungsschaltung (1) und die Schärfe-Hervorhebungsschaltung (4) justierbare Schaltungen sind, deren Steuerparametergruppen im Speicher eines Empfängers als Makros gespeichert sind, aus dem der Benutzer das gewünschte Makro auswählen kann.

**Revendications**

1. Agencement de circuit pour l'accentuation de la netteté et l'atténuation du bruit d'une image de télévision en transformant un signal de luminance entrelacé arrivant sous la forme d'une file d'attente d'échantillons en un signal de sortie sous la forme d'une file d'attente d'échantillons tout d'abord dans un circuit d'atténuation du bruit et ensuite dans un circuit d'accentuation de la netteté, caractérisé en ce que

le circuit de réduction du bruit (1) est récursif et donne un échantillon de bruit réduit comme réponse à au moins un signal de luminance d'un signal d'entrée et à au moins un échantillon d'une image antérieure,

comme réponse à un échantillon de bruit réduit, un circuit d'accentuation de la netteté (4) donne un signal de sortie de l'agencement de circuit dont le bruit est réduit et la netteté accentuée, et

ledit signal de sortie est de plus conduit vers une mémoire d'où les échantillons sont amenés en contre-réaction en tant qu'échantillon d'une image antérieure vers une entrée du circuit de réduction du bruit (1), le circuit d'accentuation de la netteté (4) étant situé à l'intérieur de la boucle de contre-réaction du circuit de réduction du bruit.

2. Agencement de circuit selon la revendication 1, caractérisé en ce que le circuit de réduction du bruit (1) est un circuit qui calcule la moyenne pondérée récursive et en ce que l'échantillon de contre-réaction est un échantillon d'une trame précédente provenant d'une mémoire d'image (5).

3. Agencement de circuit selon la revendication 1 ou 2, caractérisé en ce que l'échantillon de contre-réaction est un échantillon reçu de la mémoire d'image (5) et obtenu par filtrage à partir des échantillons de deux trames précédentes.

4. Agencement de circuit selon la revendication 3, caractérisé en ce que le filtrage est un filtrage moyen.

5. Agencement de circuit selon la revendication 2, caractérisé en ce que l'échantillon de retour est une moyenne pondérée de deux échantillons de la trame précédente, les échantillons étant adjacents dans la direction verticale.

6. Agencement de circuit selon la revendication 1, caractérisé en ce que le circuit de réduction du bruit (1) et le circuit d'accentuation de la netteté (4) sont des circuits qui peuvent être réglés, dont les groupes de paramètres de commande sont stockés dans la mémoire d'un récepteur sous la forme de macro-instructions à partir desquelles l'utilisateur peut choisir la macroinstruction voulue.

Luminance
625/1:1/50

6

FROM INTER-
LACED TO
NON-INTER-
LACED CON-
VERSION

1 or 2
FIELD
MEMORIES

5

4

PEAKING

a
b
c

LINE MEMORY

3

LINE MEMORY

2

1

RECURSIVE
AVERAGE

A

Luminance
625/2:1/50

Fig. 1

Fig. 2

Fig. 3

Fig. 4